# EUROPÄISCHE PATENTSCHRIFT

(11) **EP 0 775 912 B1**
(45) Veröffentlichungstag und Bekanntmachung des Hinweises auf die Patenterteilung: **26.03.2003**
(21) Anmeldenummer: 96118420.7
(22) Anmeldetag: 16.11.1996
(51) Int. Cl.: G01N 33/00

(54) **Apparat und Verfahren zur Ermittlung absoluter Gaskonzentrationen unter Verwendung halbleitender Gassensoren**
Apparatus and method for the determination of absolute gas concentrations by using semiconducting gas sensors
Appareil et procédé pour déterminer des concentrations absolues de gaz en utilisant des capteurs de gaz semi-conducteurs

(30) Priorität: 21.11.1995 DE 19543296
(43) Veröffentlichungstag der Anmeldung: 28.05.1997
(73) Patentinhaber: I.T.V.I. INTERNATIONAL TECHNO VENTURE INVEST AG, 9490 Vaduz (LI)
(72) Erfinder: Rump, Hanns, 63840 Hausen (DE)
(74) Vertreter: Lelgemann, Karl-Heinz, Dipl.-Ing.

(56) Entgegenhaltungen:
- EP-A- 0 075 101
- EP-A- 0 092 068
- WO-A-95/29072
- US-A- 3 949 599
- US-A- 4 399 684
- IEEE ELECTRON DEVICE LETTERS, Bd. 16, Nr. 6, Juni 1995, NEW YORK, US, Seiten 286-288, XP000514732 R. E. CAVICCHI: "FAST TEMPERATURE PROGRAMMED SENSING FOR MICRO-HOTPLATE GAS SENSORS"
- SENSORS AND ACTUATORS B CHEMICAL, Bd. B8, Nr. 2, Mai 1992, LAUSANNE, CH, Seiten 187-189, XP000286954 SATOSHI NAKATA: "NEW STRATEGY FOR THE DEVELOPMENT OF A GAS SENSOR BASED ON THE DYNAMIC CHARACTERISTICS: PRINCIPLE AND PRELIMINARY EXPERIMENT"

## Beschreibung

Die Erfindung bezieht sich auf ein Verfahren zur Detektion von Gasen nach dem Oberbegriff des Patentanspruchs 1.

Es ist bekannt, die Lüftung von Fahrzeugen oder Gebäuden zu steuern, indem durch Sensoren die Qualität z.B. der Außenluft überwacht wird. Immer dann, wenn die Qualität der Außenluft schlechter als ein vorbestimmter Wert wird, wird die Zufuhr von Außenluft unterbunden und die Lüftung wird auf Umluftbetrieb gestellt.

Es ist aus der EP-A-0 287 599 bekannt, für diesen Zweck als Sensoren Halbleitersensoren mit Zinndioxid als sensitivem Material einzusetzen. Beim Einsatz in Kraftfahrzeugen haben diese Sensoren den Nachteil, dass Abgase von Dieselfahrzeugen nicht detektiert werden. Darum ist vorgeschlagen worden, für oben genannte Zwecke zwei Sensoren einzusetzen, wobei ein Sensor die in Dieselabgasen typischen NOx-Gase (reduzierbare Gase) detektiert und z.B. ein Halbleitersensor ist, mit Wolframtrioxidwirkschicht oder Phthalocyanin als Wirkschicht. Der andere Sensor ist meist ein Zinndioxidsensor und detektiert die in Bezinabgasen typischen Kohlewasserstoffverbindungen und Kohlenmonoxid (oxidierbare Gase).

Weiter ist in der WO-A-9529072 vorgeschlagen worden, mit einem im instabilen Bereich arbeitenden Metalloxidsensor aus vorzugsweise einem Gemisch verschiedener Metalloxide sowohl Benzin- als auch Dieselabgase simultan zu detektieren, indem die durch Gaseinfluß typischen Erhöhungen oder Verringerungen des Sensorwiderstandes ausgenutzt werden, wobei die typischen Absolutbeträge der Widerstandsänderungen ausgenutzt werden.

Vorzugsweise wird dabei die Methode der FAST FOURIER ANALYSE zur Signalbewertung eingesetzt.

Diese Methode hat den Vorteil, mit nur einem einzigen Sensorelement auszukommen und das Auftreten beider Abgasgruppen zuverlässig und kostengünstig detektieren zu können. In seltenen Fällen zeigt diese Methode ihre Grenzen. Stets dann, wenn ein hoher Pegel an Schadstoffen permanent und in einigermaßen gleicher Konzentration auf das Sensorelement einwirkt, interpretiert die nachgeschaltete Signalauswertung nach der FFA-Methode das Ausbleiben von Signaldynamik als Vorhandensein unbelasteter Außenluft und öffnet die Lüftungszufuhr, obwohl unter gewissen Umständen das Fahrzeug z.B. in der Tiefgarage mit sehr hoher Luftbelastung steht und es sinnvoller wäre, die Luftzufuhr in dieser Situation nicht zu öffnen.

Aus der IEEE ELECTRON DEVICE LETTERS, Bd. 16, Nr. 6, Juni 1995, New York, US, Seiten 286 bis 288, ist ein Verfahren zur Detektion von Gasen bekannt, bei dem auch Halbleitergassensoren eingesetzt werden, die Sensorelemente mit gassensitiven Wirkschichten, z.B. aus Zinndioxid, aufweisen; eine im Falle dieses bekannten Verfahrens vorhandene und eingesetzte Erkennungstechnologie erfaßt den elektrischen Widerstand der Sensorelemente.

Bei dem bekannten Verfahren wird die Temperatur der Sensorelemente in kurzen Intervallen, die sich im Millisekundenbereich bemessen, impulsartig verändert, wobei die Richtung der Veränderung jeweils dieselbe ist. Das Ausmaß der Temperaturveränderung kann unterschiedlich gewählt werden; dies gilt auch für die Dauer des Temperaturimpulses.

Ausgehend von dem vorstehend geschilderten Stand der Technik liegt der Erfindung die Aufgabe zugrunde, das gattungsgemäße Verfahren zur Detektion von Gasen auch dann einsetzbar zu machen, wenn dauerhaft ein hoher Pegel an Schadstoffen vorliegt.

Diese Aufgabe wird erfindungsgemäß durch die Merkmale im kennzeichnenden Teil des Patentanspruchs 1 gelöst.

Durch den Vergleich zwischen dem tatsächlichen Sensorwiderstandsverlauf und dem in der Auswerte- und Steuereinheit abgespeicherten Sensorwiderstandsverlauf für Normalluft lassen sich ohne weiteres Rückschlüsse auf in der überwachten Luft vorhandene Schadstoffe ziehen.

Im Falle der Erfindung wird der Halbleitergassensor mit einer einmal festgelegten optimalen Normalbetriebstemperatur betrieben. Ausgehend von dieser Normalbetriebstemperatur wird die Temperatur des Halbleitergassensores zyklisch um einen vorgebbaren Betrag erhöht bzw. vermindert, so dass der Halbleitergassensor insgesamt bei drei Temperaturen betrieben wird, nämlich der Normalbetriebstemperatur, einer herabgesetzten und einer heraufgesetzten Temperatur. Erfindungsgemäß wird die Reaktion des Sensorelements in einem nicht statischen Zustand, nämlich bei einem schnellen Temperaturwechsel, erfaßt und zur Grundlage der Schadstoffermittlung gemacht.

Vorteilhafte Weiterbildungen des erfindungsgemäßen Verfahrens ergeben sich aus den Unteransprüchen 2 bis 11.

Die Erfindung nutzt die Beobachtung aus, dass die Reaktion matalloxidischer Sensoren gegenüber oxidierbaren und/oder reduzierbaren Gasen sehr stark abhängig ist von der Temperatur der gassensitiven Metalloxidschicht. Typisch für fast alle Metalloxide ist z.B., dass bei hohen Temperaturen die Reaktion auf oxidierbare Gase höher ist als bei niedrigen Temperaturen und die Reaktion auf reduzierbare Gase bei niedrigen Temperaturen größer ist als bei höheren Temperaturen.

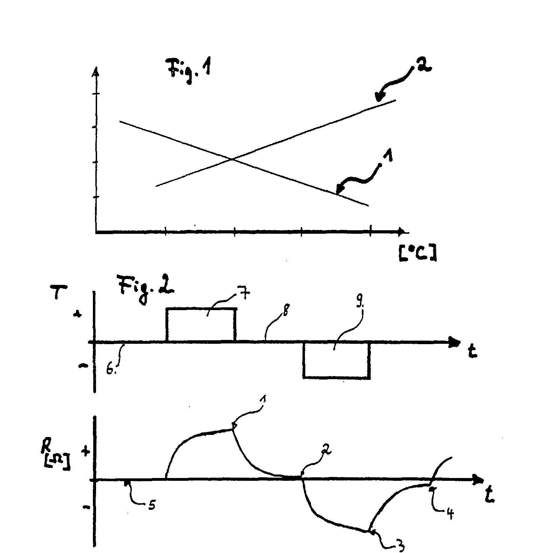

Figur 1 zeigt den prinzipiellen Zusammenhang, wobei die Abhängigkeit von NOx (1.1.) und Kohlenwasserstoffen (1.2) dargestellt ist.

Weiter ist bekannt, dass die spezifische Empfindlichkeit der Sensoren gegenüber verschiedenen Zielgasen sich mit der Sensortemperatur verändert.

Erfindungsgemäß wird vorgeschlagen, die Effekte an Metalloxid- und anderen Halbleitergassensoren auszunutzen, die im Zusammenhang mit Temperaturänderungen der Wirkschicht auftreten, um auf das Vorhandensein von Gasen schließen zu können.

Figur 2 zeigt den grundsätzlichen Gedankenansatz:

Die Betriebstemperatur des Sensorelementes wird ausgehend von einem Normalwert (2.6) auf einen höheren Wert (2.7) umgeschaltet. Nach einstellbarer Zeit wird wieder der Normalwert (2.8) eingeschaltet, um anschließend auf einen verminderten Temperaturwert (2.9) abgesenkt zu werden. Anschließend wiederholt sich dieser Zyklus. Die jeweiligen Zeiten sind für jeden Schritt identisch und für diese Darstellung so gewählt, dass sich ein Gleichgewichtszustand im Verhältnis der Luft zur Wirkschicht einstellen kann. Jeder Schritt wird insofern mindestens einige Minuten lang sein.

Dann ergibt sich eine typische Veränderung des Widerstandsverlaufes der Sensorwirkschicht. Bei Normaltemperatur und dem Angebot normaler Luft ergibt sich ein Widerstandswert von (2.5), der sich bei höherer Temperatur der Wirkschicht verändert auf (2.1), sich bei Normaltemperatur wieder auf (2.2) einpegelt, sich bei Untertemperatur auf (2.3) verändert und bei Rückkehr auf Normaltemperatur wieder den Normalwert (2,4) anstrebt. Sensoren reagieren sehr empfindlich auf Temperatursprünge. Es dauert sehr lange, bis sich nach einem Temperatursprung stabile Verhältnisse eingestellt haben. Die Kurve verläuft meist als e-Funktion.

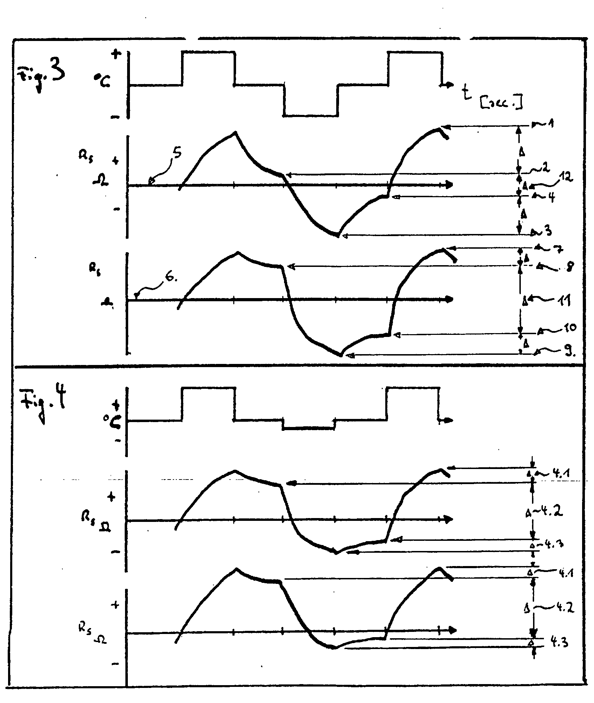

Figur 3 zeigt den Widerstandsverlauf des Sensorelementes, wenn die Temperatursprünge in kürzeren Zeiten erfolgen. Ausgehend vom Normalwert (3.5) erreicht der Sensorwiderstand zum Ende der Überheizung einen Höchstwert, wobei zu diesem Zeitpunkt noch kein Gleichgewichtszustand bzw. Sättigung eingetreten ist. Am Ende des Betriebes mit Normaltemperatur (3.2) ist der Ausgangswert noch nicht erreicht. Die Absenkung der Sensortemperatur erzwingt bereits ein Absinken des Sensorwiderstandes auf den Wert (3.3), bevor der Ausgangswert erreicht wird. Die nunmehr erneut eingeschaltete Normaltemperatur veranlaßt den Sensorwiderstand wieder zur Steigungsumkehr. Vor Beginn der Überheizungsphase ist ein Sensorwiderstand (3.4) erreicht, der unter dem bei stabilen Verhältnissen liegenden Wert liegt. Zwischen den Punkten (3.2) und (3.4) kann leicht ein Differenzbetrag (3.12) ausgemacht werden.

In der Darstellung ist ein Sensorwiderstandsverlauf gezeigt, wobei der Sensor zusätzlich mit einer geringen Konzentration NO2, ca. 300ppb begast wird. In diesem Fall liegen die Punkte (3.8) und (3.10) deutlich weiter auseinander. Der Differenzbetrag (3.11) ist deutlich höher als der Differenzbetrag bei Normalluft (3.12). Dieser Differenzbetrag gibt Auskunft über die Konzentration reduzierbarer Gase in der Umgebungsluft des Sensors.

Die vorerwähnte Hysterese erklärt sich aus der Tatsache, dass Zeiten zur Erreichung eines stabilen Gleichgewichts zwischen dem Luftsauerstoff und dem oxidischen Sensormaterial abhängig sind von der Größe des Temperatursprunges, von der Dauer der Verweilzeiten in den verschiedenen Temperaturen und von der Anwesenheit von oxidierbaren oder reduzierbaren Substanzen in der Luft. Bei Anwesenheit dieser Substanzen werden die Zeiten verlängert, was zur Erhöhung der erwähnten Hysterese führt. Es gilt die Aussage, dass die Größe der Hysterese ein Maß für die Anwesenheit chemisch reaktiver Gase in der Umgebungsluft des Sensors ist.

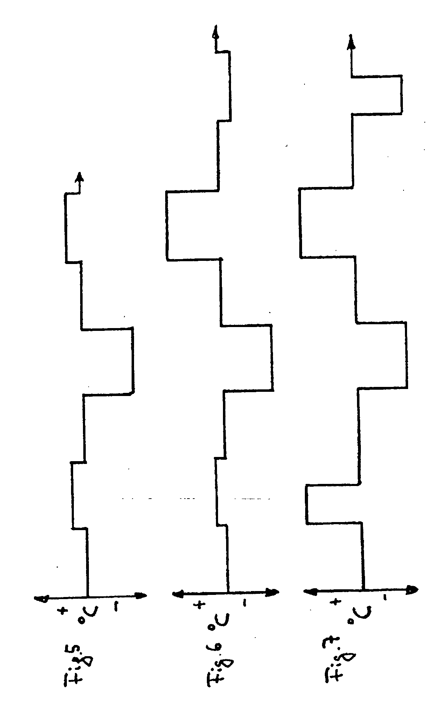

In Figur 4 und Figur 5 ist gezeigt, wie sich die Hysterese bzw. der Signalverlauf verändert, wenh die temporäre Temperaturerhöhung ungleich der temporären Temperaturabsenkung ist. In Figur 4 ist die Absenkung (°K) geringer als die Erhöhung. In Figur 5 ist es umgekehrt. Die Analyse der Signale zeigt typische Veränderungen im Signalverlauf.

Dabei ist es von Bedeutung, nicht nur die Hysterese laut Figur 3 zu betrachten, sondern auch die Pegeldifferenz zwischen Höchstwert und Annäherungswert an den Normalwert (1), die Pegeldifferenz zwischen Minimalwert und dem zugeordneten Annäherungswert an den Normalwert (3) und natürlich der Hysterese (2). Wird die Temperaturabsenkung kleiner gehalten als die Temperaturerhöhung (Figur 4), ist bei Anwesenheit von oxidierbaren Gasen die Differenz zwischen Maximumwert und zugeordnetem mittleren Wert (4.1) größer als die Differenz zwischen Minimalwert und zugeordnetem mittleren Wert (4.3). Bei Begasung mit reduzierbaren Gasen verhält es sich umgekehrt.

Wird die Temperaturerhöhung größer als die Temperaturabsenkung, kommt es zu ähnlichen Beobachtungen (Figur 5). Je nach Art des Metalloxides ist die Differenz zwischen Mini- bzw. Maximalwert und zugeordnetem Mittelwert eine Funktion des Betrages der Temperaturänderung, der Temperaturwechselzeit, des Verhältnisses des positiven oder negativen Änderungsbetrages und der Art und Konzentration des zugeführten Gases. Um alle in diesem Zusammenhang stehenden Effekte beobachten zu können, wird vorgeschlagen, die Temperaturen entsprechend Figur 6 variabel zu verändern. Dabei werden jeweils kleine und große Temperatursprünge miteinander abgewechselt mit dem Ziel, die in Figur 4 und Figur 5 vorgestellten Effekte bei nichtsymmetrischer Änderung der Temperaturbeträge beobachten zu können.

Eine weitere Variationsmöglichkeit zeigt Figur 7. Dabei wird die Zeit variiert, in welcher die geänderte Temperatur auf den Sensor einwirkt. Im Grunde ist es vergleichbar, ob die Temperatur sich um einen geringen Betrag über einen längeren Zeitraum verändert oder ob die Temperatur über einen kurzen Zeitraum um einen großen Betrag verändert wird.

Eine weitere Methode, gasinduzierte Signifikanzen auswerten zu können, wird in der Möglichkeit gesehen, einen Temperaturwechselzyklus ähnlich wie Figur 3 zu erzeugen. Die Temperaturwechselfrequenz wird so gewählt, dass sie in etwa zwei bis vier mal schneller ist als die T90-Zeit. (Das ist die Zeitspanne, bei der nach Temperatursprung sich das Signal, dem Verlauf einer e-Funktion folgend, dem Endwert um 90% angenähert hat.) Das sich ergebende Sensorsignal ähnelt dann einer Sinuskurve mit mehr oder weniger großen nichtlinearen Verzerrungen.

Der Anteil der Verzerrungen wird mit Hilfe einer Fourier-Analyse berechnet. Es hat sich als vorteilhaft erwiesen, dabei bis zur zwanzigsten Oberwelle der Temperaturwechselfrequenz zu gehen. Das sich ergebende Spektrum ist jeweils typisch für Normalluft und für belastete Luft, wobei sich Signifikanzen ergeben, die Aussagen über Art und Konzentration des angebotenen Gases erlauben.

Die Unterscheidung reduzierbarer und oxidierbarer Gase ist mit dieser Methode sehr einfach zu treffen, weil bei Begasung mit einem Gas aus einer dieser Gruppe oder bei Begasung mit einem Gemisch aus Gasen dieser Gruppe sich hervorragende und sehr deutliche Unterscheidungen ergeben, wie schon die Betrachtung von Figur 3 erwarten läßt.

Je nach Aufgabenstellung kann es vorteilhaft sein, den Temperaturwechselzyklus temperatursymmetrisch oder nichtsymmetrisch ablaufen zu lassen, was jeweils in Abhängigkeit vom sensitiven Material des Sensors zu sehr unterschiedlichen Aussagen führt.

Es wird vorgeschlagen, dass ein Mikrorechner die sich ergebenden Spektren mit vorher abgelegten Mustern von Spektren vergleicht und aus den Ergebnissen Aussagen über Art der Gase und dessen Konzentration zu machen.

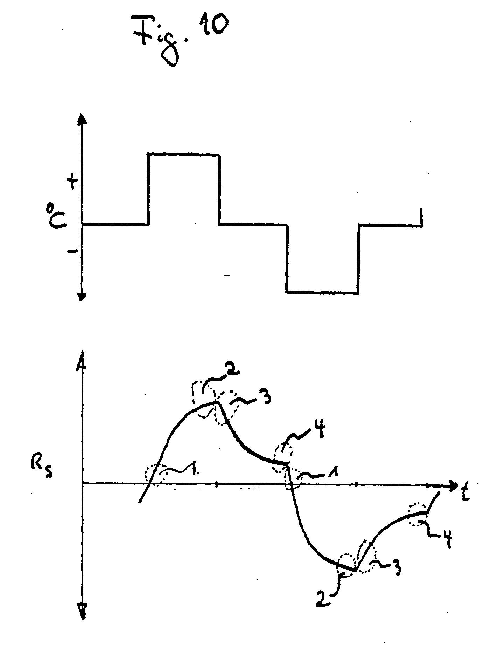

Ebenfalls erzeugt eine Methode nach Figur 10 Informationen über Gasangebote. Dabei wird zu Beginn einer Phase jeder Temperaturerhöhung oder -reduzierung der Gradient der Widerstandsänderung (10.1) festgestellt. Zum Ende dieser Phase wird erneut der Gradient der Widerstandsänderung festgestellt. Das Verhältnis der Gradienten zueinander gibt Auskunft über das Vorhandensein von Gasen. Bei manchen Anwendungen genügt es, eine einzige Richtung (Erhöhung oder Absenkung der Temperatur) zu untersuchen, um die gewünschten Informationen zu erhalten. Vorzugsweise wird diese Methode nach Figur 10 jedoch sowohl im Falle der zyklischen Temperaturerhöhung wie auch der -reduzierung eingesetzt, wobei die Betrachtung aller gewonnenen Informationen erfolgt.

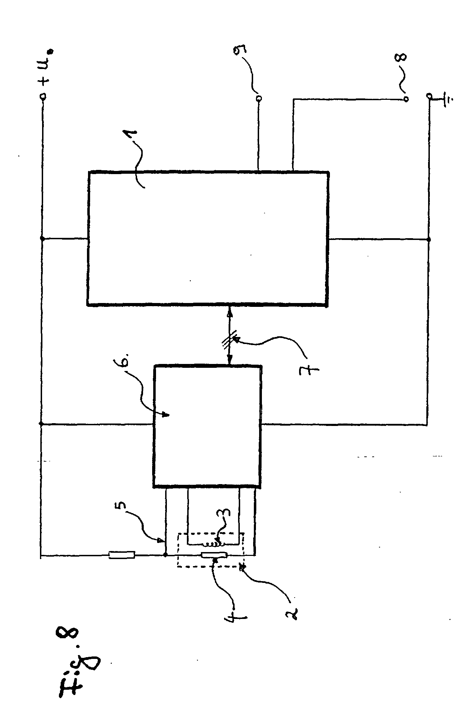

Zur Auswertung der Methoden ist ein Aufbau notwendig, ähnlich Figur 8:
Ein Sensorelement (2) enthält eine gassensitive Wirkschicht (4) aus z.B. Metalloxid oder einem Gemisch aus Metalloxiden und eine Heizung (3), die elektrisch mit einem Heizungsregler (6) verbunden ist und vorzugsweise aus einem Material wie Platin besteht, dessen Widerstand einen hohen Temperaturkoeffizienten aufweist, der zu Regelungszwecken herangezogen werden kann. Gelegentlich wird ein anderer Heizer verwendet, wobei dann im Sensor ein Temperatursensor integriert ist, der die Sensortemperatur erfaßt und dem Heizungsregler (6) meldet. Dieser Heizungsregler (6) bekommt die drei Solltemperaturen über eine Datenleitung (7) gemeldet, die von der zentralen Steuer- und Regeleinheit (1) abgeleitet werden. Die zentrale Steuer- und Regeleinheit ist vorzugsweise ein Microprozessor (µP). Das Sensorsignal wird über die elektrische Verbindung (5) in den uP eingelesen. Der µP hat einen Schaltausgang (8), der die eingangs beschriebene Lüftungsklappe ansteuert und eine digitale Schnittstelle z.B. des Standards RS232 (9) bedient.

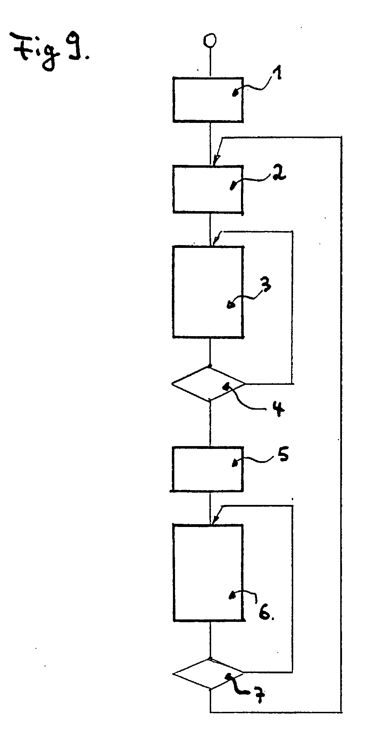

Für die Applikation "Lüftung von Fahrzeugen" wird vorteilhaft ein Ablauf vorgeschlagen, der in Figur 9 prinzipiell dargestellt ist:
In einer Initialisierungsphase (1) wird das Sensorelement vorgeheizt und erreicht seinen Betriebszustand. Diese Phase dauert etwa 30 bis 60 sec und es wird vorgeschlagen, in dieser Phase die Lüftungsklappe geschlossen zu halten, weil das Fahrzeug z.B. in seiner eigenen Abgaswolke sich befinden und eine offene Lüftung Nachteile haben könnte. Nach Ende der Initialisierung (2) wird die Lüftung geöffnet.
Anschließend arbeitet das Programm in einer Routine, die in der WO-A-9529072 beschrieben ist und bei der absolute Änderungsbeträge des Sensorelementes, unabhängig von der Richtung der Änderung, gesucht und bewertet werden. Bei Erreichen von Kriterien (4), die auf das Erreichen einer ungewöhnlichen Schadstoffbelastung schließen lassen und die in der WO-A-9529072 näher beschrieben sind, wird die Luftzufuhr unterbrochen (5) und diese Programmsequenz wird verlassen. Die Programmsequenz (6) arbeitet mit den in der WO-A-9529072 beschriebenen Methoden. Durch zyklische Umschaltung der Temperatur des Sensorelementes wird festgestellt, ob sich die Belastung der Luft wieder einem frei definierten Wert annähert, der als "gering belastete Außenluft" zu beschreiben ist. Wenn das der Fall ist (7), wird die Lüftung wieder für die Außenluft geöffnet (2) und die vorbeschriebene dynamische Bewertung der Sensorsignale (3) wird vorgenommen.

Vorteilhaft verbindet diese Abfolge die außerordentlich schnelle und sichere Detektion von reduzierbaren oder oxidierbaren Gasen kurz nach dem Auftreten nach der Lehre der WO-A-9529072 mit sehr schneller Schließung der Lüftung und die neue Möglichkeit, die Öffnung der Lüftung durch Feststellen des absoluten Gaspegels so zu steuern, dass niemals eine belästigende, hohe Gaskonzentration von außen in das Fahrzeug eindringen kann. Es kann im Programm des µP vorgesehen werden, die maximale Schließzeit der Lüftung auf einen frei wählbaren Wert zu begrenzen, um der Unterschreitung eines sicheren Sauerstoffpegels innerhalb des Fahrzeuges vorzubeugen.

Das vorstehend angegebene Verfahren wird immer dann erfolgreich eingesetzt, wenn kostengünstig mit einem einzigen Sensorelement auf den absoluten Gaspegel verschiedener Gase geschlossen werden muß, insbesondere bei gleichzeitiger Anwesenheit von oxidierbaren und reduzierbaren Gasen, die sich bei Betrieb mit konstanter Temperatur gegenseitig beeinflussen oder sogar völlig maskieren können. Weiter ist vorteilhaft jedes Driftverhalten des Sensorelementes ohne Belang, weil Pegeldifferenzen und keine statischen Pegel ausgewertet werden. Zuletzt ist der Einfluß von Luftfeuchte bei Einsatz des vorstehend beschriebenen Verfahrens nahezu völlig unterdrückt, weil in der relativ kurzen Zeit der Temperaturänderung ein Mittelwert in Bezug auf die Luftfeuchte sich einstellt und daher die Luftfeuchte keinen Einfluß auf die Auswertemethode hat.

Es liegt auf der Hand, dass die Schärfe der mit dem Verfahren möglichen Gasanalyse mit der Zahl der Sensorelemente und der Zusammensetzung der gassensitiven Schicht weiter erhöht werden kann. So kann es erfolgreich sein, Sensorelemetne mit dem Verfahren auszuwerten, die aus Zinnoxid mit verschiedenen Zuschlägen bestehen (z.B. Platin, Palladium). Diese Sensoren können z.B. mit Sensoren kombiniert werden, deren Wirkschicht aus Zinkoxid, Galliumoxid, aus Wolframtrioxid oder aus einem Gemisch verschiedener Metalloxide besteht. Das bei den einzelnen Sensoren gewonnene Spektrum unterscheidet sich bei verschiedenen Gasen und deren Gemischen stets in signifikanter Weise und die rechnerische Verkopplung der einzelnen Spektren, z.B. in einer Matrix, gibt vergleichsweise kostengünstig, schnell und zuverlässig Auskunft über die Natur und Konzentration der den Sensoren angebotenen Gase.

Bei der Auswertung werden erfolgreich neuronale Netze eingesetzt.

Die Kombination der Merkmale des vorstehend beschriebenen Verfahrens mit anderen Methoden der Sensorsignalverarbeitung ist möglich, wobei der Grundgedanke der Erfindung stets der ist, dass die Temperatur des Sensorelementes zyklisch geändert wird und die typische Abweichung vom Temperaturverlauf bei normaler Luft zur Bestimmung von Konzentration und Art der vorhandenen Gase ausgenutzt wird.

## Patentansprüche

1. Verfahren zur Detektion von Gasen, bei dem Halbleitergassensoren eingesetzt werden, die Sensorelemente mit gassensitiven Wirkschichten, vorzugsweise aus Metalloxiden, aufweisen, der elektrische Widerstand des Sensorelements mittels einer elektrischen Steuer- und Auswerteeinheit ausgewertet wird und die Temperatur der Wirkschicht des Sensorelements mittels der elektrischen Steuer- und Auswerteeinheit gesteuert und geregelt wird, **dadurch gekennzeichnet, dass** - ausgehend von einer Normalbetriebstemperatur der Wirkschicht des Sensorelements - deren Temperatur um einen vorgebbaren Betrag erhöht bzw. reduziert, wieder auf Normaltemperatur gebracht und dann um einen vorgebbaren Betrag reduziert bzw. erhöht wird, dass die Aufheiz-, Normaltemperatur- und Reduzierphase kürzer eingestellt werden als die Zeitdauer, die das Signal des Sensorelements benötigt, um nach einem Gasimpuls 90 % des Endwerts zu erreichen, und dass der dabei in der elektrischen Steuer- und Auswerteeinheit erfasste Sensorwiderstandsverlauf mit einem in der elektrischen Steuer- und Auswerteeinheit abgespeicherten Sensorwiderstandsverlauf verglichen wird, der dem vorgebbaren Temperaturphasenzyklus bei Normalluft entspricht.

2. Verfahren nach Anspruch 1, **dadurch gekennzeichnet, dass** die Sensorwiderstandswerte innerhalb des Temperaturzyklus jeweils zu Zeitpunkten bestimmt und der Verarbeitung zugeführt werden, welche in einem festen Phasenverhältnis zu den Schaltpunkten des Temperaturänderungszyklus stehen.

3. Verfahren nach Anspruch 1 und 2, **dadurch gekennzeichnet, dass** die Sensorwiderstandswerte jeweils unmittelbar vor oder nach dem Abschluß der Aufheiz-, Normaltemperaturund Reduzierphasen erfaßt werden, wobei die Differenz der so gewonnenen Beträge als Ausgangswert für die Berechnung der tatsächlich vorhandenen Gaskonzentration genutzt wird.

4. Verfahren nach Anspruch 1 bis 3, **dadurch gekennzeichnet, dass** die Differenz der Sensorwiderstände jeweils unmittelbar vor oder nach Ende der Aufheizphase und unmittelbar vor oder nach Ende der anschließenden Normaltemperaturphase gebildet wird, und dass die Differenz der Sensorwiderstände unmittelbar vor oder nach Ende der Reduzierphase und unmittelbar vor oder nach Ende der anschließenden Normaltemperaturphase gebildet wird, und dass die beiden so gebildeten Differenzbeträge voneinander subtrahiert werden, wobei der so ermittelte Betrag als Ausgangswert für die Berechnung der tatsächlich vorhandenen Gaskonzentration genutzt wird.

5. Verfahren nach Anspruch 4, **dadurch gekennzeichnet, dass** die beiden ermittelten Differenzbeträge in ein Verhältnis zueinander gesetzt werden, wobei der ermittelte Betrag als Ausgangswert für die Berechnung der tatsächlich vorhandenen Gaskonzentration genutzt wird.

6. Verfahren nach mindestens einem der vorangegangenen Ansprüche, **dadurch gekennzeichnet, dass** der Sensorwiderstand unmittelbar nach Anfang oder vor Ende der Normaltemperaturphase nach einer Aufheizphase gemessen wird und mit dem gemessenen Sensorwiderstandswert unmittelbar nach Anfang oder vor Ende der nachfolgenden Normaltemperaturphase nach einer Reduzierphase verglichen wird, und dass die Differenz der ermittelten Sensorwiderstände als Ausgangswert für die Bestimmung der tatsächlich vorhandenen Gaskonzentration genutzt wird, wobei es unerheblich ist, ob zuerst der Sensorwiderstandswert einer Aufheizphase oder der einer Reduzierphase bestimmt wird.

7. Verfahren nach Anspruch 1, **dadurch gekennzeichnet, dass** der aus den wechselnden Sensorwiderständen sich ergebende elektrische Signalverlauf unter Zugrundelegung der Frequenz des Temperaturphasenzyklus nach der Methode der Fourier-Analyse auf Oberwellen hin untersucht wird, wobei das sich so ergebende Spektrum die Informationen zur Bestimmung von Gassubstanz und/oder Gaskonzentration liefert.

8. Verfahren nach einem der Ansprüche 1 bis 7, **dadurch gekennzeichnet, dass** die Durchführung des Verfahrens unter Einsatz eines artifiziellen neuronalen Netzes erfolgt.

9. Verfahren nach Anspruch 1, **dadurch gekennzeichnet, dass** der Differentialquotient der Sensorwiderstandsänderung unmittelbar nach Umschaltung in eine andere Temperaturphase erfaßt wird, dass der Differentialquotient der Sensorwiderstandsänderung unmittelbar vor Ende der jeweiligen Temperaturphase erfaßt wird, dass die Differentialquotienten rechnerisch miteinander verglichen werden, und dass das Ergebnis zur Bestimmung der Gaskonzentration herangezogen wird.

10. Verfahren nach einem der Ansprüche 1 bis 9, **dadurch gekennzeichnet, dass** es benutzt wird, um die absolute Konzentration von Gasen in der Außenluft von Kraftfahrzeugen zu Zwecken der Steuerung der Lüftungsklappen zu ermitteln, wobei die Lüftung bei einer höher als üblichen Gaskonzentration geschlossen wird oder die Lüftung bei der Verminderung des Gaspegels unter den Gaspegel bei Schließung der Lüftung wieder geöffnet wird.

11. Verfahren nach Anspruch 10, **dadurch gekennzeichnet, dass** lediglich die Funktion "Öffnen" der Lüftung durch Verwendung des Verfahrens nach einem der Ansprüche 1 bis 9 gesteuert wird und die Funktion "Schließen" der Lüftung nach einem beliebigen anderen Verfahren erfolgt, wobei der absolute Gaspegel nach Schließung der Lüftung erfaßt und gespeichert wird und verglichen wird mit dem jeweils aktuellen Gaspegel, wobei das Schaltkriterium beliebig die Verminderung um einen absoluten Betrag, um einen proportionalen Betrag oder um einen zeitabhängig variablen proportionalen Betrag sein kann.

## Claims

1. A method for the detection of gases, in which semiconductor gas sensors having sensor elements with gas-sensitive active layers, preferably composed of metal oxides, are employed, the electrical resistance of the sensor element is evaluated by means of an electrical control and evaluation unit and the temperature of the active layer of the sensor element is controlled and regulated by means of the electrical control and evaluation unit, **characterised in that** - starting from a normal operating temperature of the active layer of the sensor element - the temperature thereof is increased or reduced by a predeterminable amount, is brought to normal temperature again and then is respectively reduced or increased by a predeterminable amount, the heating phase, the normal temperature phase and the reducing phase are adjusted to be shorter than the period of time required by the signal of the sensor element to attain 90 % of the final value following a gas pulse, and the sensor resistance curve recorded at the same time in the electrical control and evaluation unit is compared with a sensor resistance curve which is stored in the electrical control and evaluation unit and which corresponds to the predeterminable temperature phase cycle in the case of normal air.

2. A method according to claim 1, **characterised in that** the sensor resistance values within the temperature cycle are each determined and fed for processing at points in time that are in a fixed phase relationship with the switching points of the temperature alteration cycle.

3. A method according to claims 1 and 2, **characterised in that** the sensor resistance values are each recorded immediately before or after the end of the heating, normal temperature and reducing phases, the difference of the quantities so obtained being used as the starting value for calculating the gas concentration actually present.

4. A method according to claims 1 to 3, **characterised in that** the difference of the sensor resistances immediately before or after the end of the heating phase and immediately before or after the end of the subsequent normal temperature phase is found, and the difference of the sensor resistances immediately before or after the end of the reducing phase and immediately before or after the end of the subsequent normal temperature phase is found, and the two difference quantities so found are subtracted from each other, the quantity so determined being used as the starting value for calculating the gas concentration actually present.

5. A method according to claim 4, **characterised in that** the two difference quantities determined are set in relation to each other, the quantity determined being used as the starting value for calculating the gas concentration actually present.

6. A method according to at least one of the preceding claims, **characterised in that** the sensor resistance immediately after the beginning or before the end of the normal temperature phase following a heating phase is measured and is compared with the measured sensor resistance value immediately after the beginning or before the end of the subsequent normal temperature phase following a reducing phase, and the difference of the sensor resistances determined is used as the starting value for ascertaining the gas concentration actually present, it being immaterial whether it is the sensor resistance value of a heating phase or that of a reducing phase that is determined first.

7. A method according to claim 1, **characterised in that** the electrical signal curve produced by the changing sensor resistances taking the frequency of the temperature phase cycle as the basis is examined for harmonics by the Fourier analysis method, the spectrum so produced providing the information for determining the gas substance and/or the gas concentration.

8. A method according to any one of claims 1 to 7, **characterised in that** the method is carried out using an artificial neural network.

9. A method according to claim 1, **characterised in that** the differential quotient of the sensor resistance change is recorded immediately after switching to a different temperature phase, the differential quotient of the sensor resistance change is recorded immediately before the end of the respective temperature phase, the differential quotients are arithmetically compared with each other and the result is used to determine the gas concentration.

10. A method according to any one of claims 1 to 9, **characterised in that** it is used to determine the absolute concentration of gases in the surrounding air of motor vehicles for the purpose of controlling the ventilation valves, the ventilation being closed when the gas concentration is higher than usual or the ventilation being opened again when the gas level decreases to below the gas level at which the ventilation was closed.

11. A method according to claim 10, **characterised in that** only the function "opening" of the ventilation is controlled by using the method according to any one of claims 1 to 9 and the function "closing" of the ventilation is effected by any other desired method, the absolute gas level after closing of the ventilation being recorded and stored and being compared with the current gas level, wherein the switching criterion may be, optionally, a decrease by an absolute amount, a decrease by a proportional amount or a decrease by a time-dependently variable proportional amount.

## Revendications

1. Procédé pour la détection de gaz, dans lequel on utilise des détecteurs de gaz qui présentent des éléments détecteurs dotés de couches actives sensibles au gaz, de préférence à base d'oxydes métalliques, dans lequel la résistance électrique de l'élément détecteur est exploitée à l'aide d'une unité électrique de contrôle et de traitement et dans lequel la température de la couche active de l'élément détecteur est contrôlée et réglée au moyen de l'unité électrique de contrôle et de traitement, **caractérisé en ce que**, partant d'une température de fonctionnement normale de la couche active de l'élément détecteur, on augmente ou on abaisse la température de celle-ci d'une valeur prédéterminée, on la ramène à la température normale et on l'abaisse ou on l'augmente d'une valeur prédéterminée, **en ce que** la phase de chauffage, la phase de température normale et la phase d'abaissement de température sont réglées plus courtes que le temps qui est nécessaire au signal de l'élément détecteur pour atteindre 90% de la valeur finale après une impulsion de gaz, et **en ce qu'**on compare la courbe d'évolution de la résistance du détecteur mesurée dans l'unité de contrôle et de traitement à une courbe d'évolution de la résistance du détecteur mémorisée dans l'unité de contrôle et de traitement, qui correspond à un cycle prédéterminé de phases de température avec de l'air normal.

2. Procédé selon la revendication 1, **caractérisé en ce qu'**on détermine et on exploite les résistances du détecteur à l'intérieur d'un cycle de température à des instants qui se situent dans un rapport de phase fixe par rapport aux points de commutation du cycle de changement de température.

3. Procédé selon les revendications 1 et 2, **caractérisé en ce qu'**on mesure les résistances du détecteur immédiatement avant ou après la fin des phases de chauffage, de température normale et d'abaissement de température, la différence des valeurs obtenues étant utilisée comme valeur de départ pour le calcul de la concentration de gaz réelle.

4. Procédé selon les revendications 1 à 3, **caractérisé en ce qu'**on forme la différence des résistances du détecteur respectivement immédiatement avant ou après la fin de la phase de chauffage et immédiatement avant ou après la fin de la phase de température normale consécutive, **en ce qu'**on forme la différence des résistances du détecteur respectivement immédiatement avant ou après la fin de la phase d'abaissement de température et immédiatement avant ou après la fin de la phase de température normale consécutive, et **en ce qu'**on soustrait l'une de l'autre les valeurs des différences ainsi obtenues, la valeur obtenue étant utilisée comme valeur de départ pour le calcul de la concentration de gaz réelle.

5. Procédé selon la revendication 4, **caractérisé en ce qu'**on établit le rapport des deux valeurs de différence calculées, le rapport ainsi obtenu étant utilisé comme valeur de départ pour le calcul de la concentration de gaz réelle.

6. Procédé selon au moins une des revendications précédentes, **caractérisé en ce qu'**on mesure la résistance du détecteur immédiatement après le début ou avant la fin de la phase de température normale consécutive à une phase de chauffage et on la compare à la résistance du détecteur mesurée immédiatement après le début ou avant la fin de la phase de température normale consécutive à une phase d'abaissement de température et **en ce qu'**on utilise la différence des résistances du détecteur mesurées pour déterminer la concentration de gaz réelle, le fait que l'on détermine en premier la résistance du détecteur d'une phase de chauffage ou celle d'une phase d'abaissement de température étant sans importance.

7. Procédé selon la revendication 1, **caractérisé en ce qu'**on examine l'évolution du signal électrique résultant des variations de résistance du détecteur sur la base de la fréquence du cycle de phases de température, selon la méthode de l'analyse de Fourier, à la recherche d'harmoniques, le spectre ainsi obtenu fournissant les informations pour la détermination de la substance gazeuse et/ou de la concentration de gaz.

8. Procédé selon une des revendications 1 à 7, **caractérisé en ce que** ledit procédé est mis en oeuvre en utilisant un réseau neuronal artificiel.

9. Procédé selon la revendication 1, **caractérisé en ce qu'**on détermine le quotient différentiel de la variation de la résistance du détecteur immédiatement après la commutation dans une autre phase de température, **en ce qu'**on détermine le quotient différentiel de la variation de la résistance du détecteur immédiatement avant la fin de la phase de température concernée, **en ce qu'**on compare entre eux par calcul les quotients différentiels obtenus et **en ce qu'**on utilise le résultat pour déterminer la concentration en gaz.

10. Procédé selon une des revendications 1 à 9, **caractérisé en ce qu'**il est appliqué pour déterminer la concentration absolue de gaz dans l'air extérieur de véhicules automobiles aux fins de commander les volets de ventilation, la ventilation étant fermée lorsque la concentration est supérieure à la normale ou la ventilation étant rouverte lorsque le niveau de gaz diminue en deçà du niveau de gaz qui a entraîné la fermeture de la ventilation.

11. Procédé selon la revendication 10, **caractérisé en ce que** seule la fonction "ouverture" de la ventilation est contrôlée par l'application du procédé selon une des revendications 1 à 9, et que la fonction "fermeture" de la ventilation est gérée par un procédé autre quelconque, le niveau de gaz absolu après la fermeture de la ventilation étant mesuré et mémorisé, et comparé au niveau de gaz actuel, le critère de commutation pouvant être au choix la diminution d'une certaine valeur absolue, d'une valeur proportionnelle ou d'une valeur proportionnelle variable en fonction du temps.
